# FASCICULE DE BREVET EUROPEEN

(11) **EP 4 594 612 B1**
(45) Date de publication et mention de la délivrance du brevet: **25.11.2026**
(21) Numéro de dépôt: 23793917.8
(22) Date de dépôt: 29.09.2023
(51) Int. Cl.: F02K 1/72, F02K 1/76

(54) **INVERSEUR DE POUSSEE COMPRENANT UN SYSTEME AMELIORE DE DEPLACEMENT DE LA STRUCTURE MOBILE VERS SA POSITION RECULEE D'INVERSION DE POUSSEE**
SCHUBUMKEHRVORRICHTUNG MIT EINEM VERBESSERTEN SYSTEM ZUM BEWEGEN DER BEWEGLICHEN STRUKTUR IN DIE EINGEZOGENE SCHUBUMKEHRPOSITION DAVON
THRUST REVERSER COMPRISING AN IMPROVED SYSTEM FOR MOVING THE MOVABLE STRUCTURE TOWARDS THE RETRACTED THRUST REVERSAL POSITION THEREOF

(30) Priorité: 29.09.2022 FR 2209925
(43) Date de publication de la demande: 06.08.2025
(73) Titulaire: Safran Nacelles, 76700 Gonfreville-l'Orcher (FR)
(72) Inventeur: MARIE, Nicolas Pierre Denis, 77550 MOISSY-CRAMAYEL (FR); VALLEROY, Laurent Georges, 77550 MOISSY-CRAMAYEL (FR); PEYRON, Vincent Jean-François, 77550 MOISSY-CRAMAYEL (FR); CARUEL, Pierre Charles, 77550 MOISSY-CRAMAYEL (FR)
(74) Mandataire: Santarelli
(86) Numéro de dépôt international: PCT/FR2023/051507
(87) Numéro de publication internationale: WO 2024/069111

(56) Documents cités:
- EP-A2- 3 165 752
- FR-A1- 2 815 672
- FR-A1- 2 966 882
- FR-A1- 3 076 864
- US-A- 4 592 508

## Description

### Domaine technique

L'invention se rapporte au domaine des nacelles et des inverseurs de poussée pour ensemble propulsif d'aéronef, et, plus particulièrement, aux systèmes permettant le déplacement vers l'arrière de la structure mobile de tels inverseurs.

### État de la technique antérieure

Les inverseurs de poussée sont des dispositifs permettant de dévier vers l'avant le flux d'air traversant l'ensemble propulsif, de manière à raccourcir les distances d'atterrissage, et à limiter la sollicitation des freins sur les atterrisseurs. Un tel inverseur est par exemple connu du document EP 3 165 752 A2.

Les inverseurs à grilles actuellement exploités dans le secteur aéronautique comprennent généralement des grilles de déviation intégrées à une structure fixe de l'inverseur, destinée à être reliée à un carter de turbomachine. Une structure mobile de l'inverseur comporte un ou plusieurs capots mobiles d'inverseur, et elle est montée déplaçable en translation par rapport à la structure fixe entre une position avancée de poussée directe, et une position reculée d'inversion de poussée. En position avancée de poussée directe, les grilles de déviation sont agencées dans une cavité des capots mobiles d'inverseur, et elles sont isolées de la veine secondaire de l'ensemble propulsif par une paroi radialement interne des capots d'inverseur. En revanche, dans la position reculée d'inversion de poussée, la paroi radialement interne reculée des capots d'inverseur définit une ouverture de passage de la veine secondaire vers les grilles de déviation.

Pour dévier au moins une partie du flux secondaire vers cette ouverture de passage en direction des grilles, l'inverseur est également équipé de volets d'obturation, qui, lorsqu'ils sont déployés, obturent au moins partiellement la veine secondaire. De manière connue, cela force l'air du flux secondaire à traverser l'ouverture de passage et à rejoindre les grilles, qui génèrent alors le flux d'air de contre-poussée vers l'avant.

Il existe également des solutions d'obturation de la veine secondaire à l'aide de membranes déployables. Une telle conception à membranes est par exemple connue du document FR 3 076 864 A1.

De manière classique, le déplacement de la structure mobile de l'inverseur, vers l'arrière en direction de sa position reculée d'inversion de poussée, s'effectue à l'aide d'actionneurs du type vérins hydrauliques ou vis à billes actionnées par un moteur électrique, par l'intermédiaire d'un arbre flexible. Cette solution conventionnelle donne satisfaction, mais la présence des actionneurs ainsi que les moyens permettant leur fixation au sein de l'inverseur pénalisent la masse globale de celui-ci.

Pour répondre à cette problématique, il a été proposé d'utiliser de l'air pressurisé de la veine secondaire pour générer une pression sur des volets d'obturation écopants, afin de provoquer le déplacement de la structure mobile vers l'arrière. Cependant, cette solution s'avère complexe à mettre en œuvre, et nécessite une cinématique particulière pour les volets d'obturation afin de les rendre écopants, cette cinématique n'étant pas forcément désirée par le concepteur de l'inverseur.

### Exposé de l'invention

Pour répondre au moins partiellement aux inconvénients mentionnés ci-dessus et relatifs aux réalisations antérieures, l'invention a tout d'abord pour objet un inverseur de poussée pour ensemble propulsif d'aéronef, l'inverseur comprenant une structure fixe équipée d'une paroi de délimitation radialement interne d'une veine secondaire de l'ensemble propulsif destinée à être traversée par un flux secondaire, l'inverseur comprenant également une structure mobile comprenant au moins un capot mobile d'inverseur présentant une cavité, de préférence ouverte vers l'avant, et délimitée entre une paroi radialement externe et une paroi radialement interne du capot mobile d'inverseur, la paroi radialement externe formant une surface aérodynamique extérieure de l'inverseur, épousée par de l'air extérieur, la structure mobile étant déplaçable en translation par rapport à la structure fixe selon un axe central longitudinal de l'inverseur, entre une position avancée de poussée directe et une position reculée d'inversion de poussée.

Selon l'invention, l'inverseur comprend également un système commandé de déplacement du capot mobile vers la position reculée d'inversion de poussée, par injection d'air extérieur à travers la paroi radialement externe du capot mobile d'inverseur, dans ladite cavité.

L'invention prévoit ainsi un système commandé de déplacement de la structure mobile basé sur une conception simple, fiable, facile à implanter, et de faible masse. En effet, la commande permettant à l'air extérieur de pénétrer dans la cavité du capot mobile peut être particulièrement simple à réaliser, par exemple sous la forme d'une simple vanne commandée, ou d'un verrou commandé, comme cela sera détaillé ultérieurement. L'air extérieur entre ainsi facilement dans la cavité, sous une pression élevée engendrant le déplacement vers l'arrière du capot mobile d'inverseur.

Le système commandé de déplacement permet en premier lieu de générer une impulsion lors du début de la course d'ouverture de la structure mobile, vers sa position reculée d'inversion de poussée. Il peut aussi permettre de contribuer au moins en partie à déplacer la structure mobile lors de la suite de cette course d'ouverture. Il est noté que lors de la suite de cette course d'ouverture, d'autres facteurs et/ou moyens permettent d'assurer le déplacement vers l'arrière, comme la trainée de l'air sur la surface extérieure aérodynamique du capot mobile, la dépression à l'arrière de celui-ci, l'introduction de l'air pressurisé issu de la veine secondaire directement dans la cavité par l'ouverture engendrée par le recul du capot, ou encore lorsque l'air externe s'engouffre par écopage dans l'ouverture engendrée à l'avant du capot mobile, ou encore l'éventuelle présence d'un actionneur qui serait alors de dimensionnement inférieur à ceux rencontrés habituellement. Néanmoins, l'invention est préférentiellement mise en œuvre sans actionneur pour la course d'ouverture en vol, un actionneur plus faiblement dimensionné pouvant néanmoins être conservé pour des opérations de test et/ou pour autoriser des opérations de maintenance au sol avec la structure mobile en position reculée. En outre, un actionneur peut être prévu pour assurer la course de fermeture de la structure mobile de l'inverseur, correspondant à son déplacement de la position reculée d'inversion de poussée, vers la position avancée de poussée directe.

Enfin, l'invention ne nécessite pas la mise en œuvre de volets d'obturation de type écopants, mais à l'inverse, la conception des moyens d'obturation de la veine secondaire reste avantageusement libre.

L'invention prévoit de préférence au moins l'une quelconque des caractéristiques techniques optionnelles suivantes, prises isolément ou en combinaison.

Selon un mode de réalisation préféré de l'invention, le système de déplacement comporte :
- au moins une écope prévue sur la paroi radialement externe du capot mobile et conçue pour écoper de l'air extérieur ;
- une vanne commandée permettant, en position ouverte, la circulation d'air extérieur à travers l'écope et en direction de ladite cavité.

Selon un autre mode de réalisation préféré de l'invention, le système de déplacement comporte :
- au moins une trappe équipant la paroi radialement externe, la trappe étant conçue de manière à pouvoir adopter une position fermée, ainsi qu'une position ouverte dans laquelle elle fait saillie radialement vers l'extérieur, en définissant une ouverture de passage de l'air extérieur à travers la paroi radialement externe ;
- un dispositif commandé permettant de maintenir la trappe en position fermée, et de libérer ladite trappe.

De préférence, le système de déplacement comporte également des moyens élastiques forçant la trappe vers sa position ouverte, lorsque celle-ci est déverrouillée.

Dans ce mode de réalisation préféré, la position en saillie de la trappe dans le flux d'air extérieur permet non seulement l'injection d'air dans la cavité du capot mobile, mais elle renforce également les efforts de déplacement de ce capot vers l'arrière, par la pression de l'air s'appliquant sur la trappe en saillie dans le flux d'air extérieur.

De préférence, le nombre d'écopes / de trappes est compris entre un et six, répartis circonférentiellement autour de l'axe central longitudinal (A1), de manière régulière ou irrégulière. Ce nombre peut cependant différer, sans sortir du cadre de l'invention.

De préférence, dans la position reculée d'inversion de poussée de la structure mobile, la structure fixe de l'inverseur et une extrémité amont de la paroi radialement interne reculée du capot mobile d'inverseur laissent apparaître entre elles une ouverture de passage d'air à travers la veine secondaire, l'inverseur de poussée comprenant également des moyens d'obturation de la veine secondaire, conçus pour dévier au moins une partie du flux secondaire vers l'ouverture de passage. De préférence, ces moyens d'obturation comprennent au moins un volet d'obturation et/ou au moins une membrane d'obturation.

De préférence, la structure fixe de l'inverseur comporte au moins une grille de déviation agencée, en position avancée de poussée directe de la structure mobile, dans la cavité du capot mobile, en étant isolée de la veine secondaire par la paroi radialement interne du capot d'inverseur. Alternativement, la/les grilles de déviation pourraient être intégrées à la structure mobile de l'inverseur, sans sortir du cadre de l'invention.

De préférence, l'inverseur comporte également un dispositif d'amortissement de fin de course d'ouverture du capot mobile, dans son déplacement allant de la position avancée de poussée directe vers la position reculée d'inversion de poussée. Ces moyens d'amortissement peuvent être incorporés à des vérins complémentaires d'ouverture ou de fermeture du capot mobile.

De préférence, l'inverseur comporte des moyens de reprise des efforts de contre-poussée entre la structure mobile et la structure fixe, générés sur les moyens d'obturation de la veine et la structure mobile. Ces moyens peuvent être communalisés avec le dispositif d'amortissement et/ou les vérins d'ouvertures et de fermetures complémentaires, ou peuvent être des moyens séparés comme des butées au niveau des rails de glissement ou des bielles télescopiques dédiées.

L'invention a également pour objet un ensemble propulsif pour aéronef, comprenant une turbomachine et une nacelle comportant au moins un capot de soufflante, ainsi qu'un inverseur de poussée tel que décrit ci-dessus.

L'invention a également pour objet un procédé de commande d'un tel inverseur de poussée. Pour entraîner le déplacement de la structure mobile de sa position avancée de poussée directe vers sa position reculée d'inversion de poussée, le procédé comprend une étape de commande du système de déplacement, de manière à ce que de l'air extérieur soit injecté à travers la paroi radialement externe, dans ladite cavité du capot mobile, afin de provoquer son déplacement vers la position reculée d'inversion de poussée.

D'autres avantages et caractéristiques de l'invention apparaîtront dans la description détaillée non limitative ci-dessous.

### Brève description des dessins

La description détaillée qui suit fait référence aux dessins annexés sur lesquels :
[Fig. 1] est une demi-vue schématique en coupe longitudinale d'un ensemble propulsif, comprenant un inverseur de poussée selon un mode de réalisation préféré de l'invention, représenté en configuration de poussée directe ;
[Fig. 2] est une demi-vue schématique en coupe longitudinale de l'inverseur équipant l'ensemble propulsif montré sur la figure 1, avec l'inverseur représenté en configuration de poussée directe ;
[Fig. 3] est une demi-vue schématique de l'inverseur montré sur la figure 2, représenté en configuration d'inversion de poussée ;
[Fig. 3A] est une demi-vue schématique similaire à celle de la figure précédente, avec l'inverseur se présentant selon une forme alternative de réalisation ;
[Fig. 4] est une vue en perspective de l'inverseur montré sur les figures 2 et 3, représenté en configuration de poussée directe ;
[Fig. 5] est une vue en perspective de l'inverseur montré sur la figure 4, représenté en configuration d'inversion de poussée ;
[Fig. 6] est une demi-vue schématique en coupe longitudinale similaire à celle de la figure 2, montrant le système commandé de déplacement de capot mobile de manière plus détaillée, et se présentant sous la forme d'un mode de réalisation préféré de l'invention ;
[Fig. 7] est une demi-vue schématique en coupe longitudinale similaire à celle de la figure 6, avec l'inverseur toujours représenté en configuration de poussée directe, mais juste avant le début de la course d'ouverture des capots mobiles d'inverseur ;
[Fig. 8] est une demi-vue schématique en coupe longitudinale similaire à celle de la figure 6, avec l'inverseur représenté en configuration d'inversion de poussée ;
[Fig. 9] est une demi-vue schématique en coupe longitudinale similaire à celle de la figure 2, avec l'inverseur se présentant sous la forme d'un autre mode de réalisation préféré de l'invention ;
[Fig. 10] est une demi-vue schématique en coupe longitudinale similaire à celle de la figure 9, avec l'inverseur toujours représenté en configuration de poussée directe, mais juste avant le début de la course d'ouverture des capots mobiles d'inverseur ;
[Fig. 11] est une demi-vue schématique en coupe longitudinale similaire à celle de la figure 9, avec l'inverseur représenté en configuration d'inversion de poussée ;
[Fig. 12] est une demi-vue schématique en coupe longitudinale similaire à celle de la figure 11, avec l'inverseur se présentant sous la forme d'une alternative ;
[Fig. 13] est une vue schématique montrant l'articulation de la trappe du mode de réalisation des figures 9 à 11, sur la paroi externe du capot mobile d'inverseur.

### Description des modes de réalisation

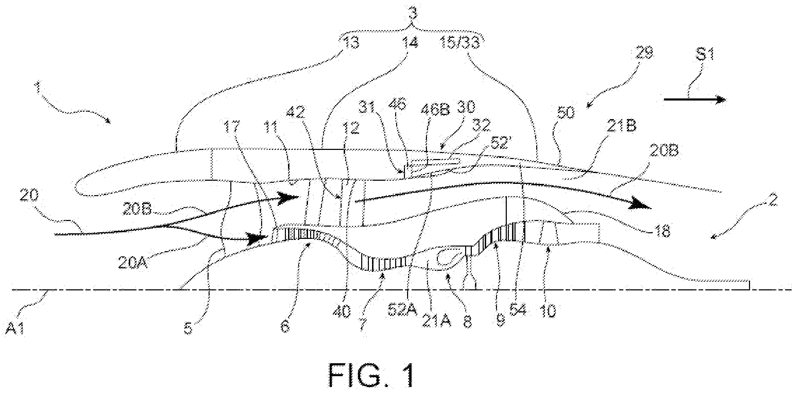

Il est représenté sur la figure 1 un ensemble propulsif 1 d'aéronef, présentant un axe central longitudinal A1.

Par la suite, les termes « amont » et « aval » sont définis relativement à un sens général S1 d'écoulement des gaz à travers l'ensemble propulsif 1, le long de l'axe A1 lorsque celui-ci génère une poussée. Ces termes « amont » et « aval » pourraient respectivement être substitués par les termes « avant » et « arrière », avec la même signification.

L'ensemble propulsif 1 comprend une turbomachine 2, une nacelle 3 ainsi qu'un mât (non représenté), destiné à relier l'ensemble propulsif 1 à une aile (non représentée) de l'aéronef.

La turbomachine 2 est dans cet exemple un turboréacteur à double flux et à double corps comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz. Le turboréacteur 2 est doté d'un carter de soufflante 11 relié au générateur de gaz par des bras structuraux 12.

La nacelle 3 comprend une section avant formant une entrée d'air 13, une section médiane qui comporte deux capots de soufflante 14 enveloppant le carter de soufflante 11, et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz. La veine secondaire 21B est délimitée radialement vers l'intérieur par un carénage interne fixe qui enveloppe le générateur de gaz. Dans cet exemple, le carénage interne fixe comprend un premier tronçon 17 appartenant à la section médiane 14, et un deuxième tronçon 18 s'étendant vers l'arrière à partir du premier tronçon 17, de manière à former une partie de la section arrière 15. Ce second tronçon 18 fait partie intégrante d'une structure fixe d'un inverseur de poussée qui sera décrit ci-après. Ce même tronçon sera par la suite dénommé paroi 18 de délimitation radialement interne de la veine secondaire 21B.

Radialement vers l'extérieur, la veine secondaire 21B est délimitée par le carter de soufflante 11, et, dans la configuration de la figure 1, par un ou plusieurs capots mobiles d'inverseur 33 formant une partie de la section arrière 15 de la nacelle 3, et qui seront décrits ultérieurement. Plus précisément, entre le carter de soufflante 11 et les capots d'inverseur 33, il est prévu une virole extérieure 40 d'un carter intermédiaire 42, ce dernier comprenant les bras structuraux 12 précités, dont l'extrémité radialement externe est fixée sur cette virole 40. Celle-ci participe donc également à délimiter la veine secondaire 21B radialement vers l'extérieur, en étant située dans le prolongement axial aval du carter de soufflante 11.

La nacelle 3 comporte donc un inverseur de poussée 30 centré sur l'axe A1 et comprenant d'une part une structure fixe 31 solidaire du carter de soufflante 11, et d'autre part une structure 29 mobile par rapport à la structure fixe 31. La structure fixe 31 comporte par exemple un cadre avant 46 qui la raccorde fixement au carter de soufflante 11, de préférence via un assemblage en bride couteau situé en aval de la virole extérieure 11. Ce cadre avant 46 contient une partie aérodynamique profilée appelée bord de déviation 46B, qui guide l'écoulement en jet inversé.

Ici, la structure fixe 31 comporte aussi une pluralité de grilles de déviation 32 agencées de manière adjacente les unes aux autres autour de l'axe A1, selon une direction circonférentielle de l'inverseur 30 et de l'ensemble propulsif 1. Par ailleurs, la structure mobile 29 comprend quant à elle les capots mobiles d'inverseur 33 précités, par exemple deux capots 33 s'étendant chacun sur une amplitude angulaire d'environ 180°. Cette configuration à deux capots 33 est particulièrement bien adaptée dans le cas d'une conception de nacelle dans laquelle les capots/parois 18 sont également montés articulés, l'inverseur 30 présentant alors une architecture dite « en D », connue sous l'appellation anglo-saxonne « D-Duct ». Dans cette architecture, les capots 18, 33 sont reliés de manière à s'ouvrir / se fermer simultanément lors des opérations de maintenance sur le moteur. Néanmoins, d'autres architectures sont possibles, comme par exemple une architecture dite « en C », connue sous l'appellation anglo-saxonne « C-Duct », ou encore une architecture dite « en O », connue sous l'appellation anglo-saxonne « O-Duct ».

Chaque capot mobile d'inverseur 33 comporte une paroi radialement externe 50, formant une surface aérodynamique extérieure de l'inverseur et de la nacelle, cette surface étant épousée par l'air extérieur. Chaque capot 33 comprend également une paroi radialement interne 52 participant à la délimitation de la veine secondaire 21B radialement vers l'extérieur. Cette paroi 52 se situe dans la continuité aval de la virole extérieure 40 du carter intermédiaire. Les deux parois 50, 52 définissent une cavité 54 de préférence ouverte axialement vers l'avant, à l'extrémité amont du capot d'inverseur 33.

La figure 1 montre l'inverseur 30 dans une configuration de poussée vers l'avant, dit « jet direct », correspondant à une configuration standard de vol. Dans cette configuration, les capots 33 de la structure mobile 29 sont dans une position de fermeture, dite position avancée de poussée ou de « jet direct », dans laquelle ces capots d'inverseur 33 sont en appui sur la structure fixe 31, en particulier sur le bord de déviation 46B faisant partie intégrante de cette dernière. En effet, dans la configuration de poussée directe, l'extrémité amont 52a de la paroi radialement interne 52 de chaque capot 33 est en appui axial contre le bord de déviation 46B.

Le maintien du capot mobile 33 dans la position avancée de poussée directe est assuré par des moyens de verrouillage de ce capot sur la structure fixe 31 de l'inverseur. Ces moyens commandés de verrouillage (non représentés) sont conventionnels, donc ils ne seront pas davantage décrits. A titre d'exemple indicatif, il peut être mis en œuvre des verrous actifs capables de déverrouiller sous charge pour contrer l'effort de compression d'un joint entre la structure mobile et le bord de déviation. Ce type de verrou peut en effet surcomprimer le joint, pour qu'ensuite le déverrouillage puisse être commandé. La structure mobile 29 est ainsi déplaçable en translation par rapport à la structure fixe 31 selon l'axe A1 de l'inverseur, entre la position avancée de poussée directe montrée sur la figure 1, et une position reculée d'inversion de poussée qui sera décrite ultérieurement. Dans la position avancée de poussée directe de la structure mobile 29, les grilles de déviation 32 sont agencées dans la cavité 54 des capots d'inverseur 33, en étant isolées de la veine secondaire 21B par la paroi radialement interne 52 de ces capots coulissant 29 d'inverseur. Cette paroi 52, formant la paroi externe de la veine secondaire, est également appelée panneau interne acoustique.

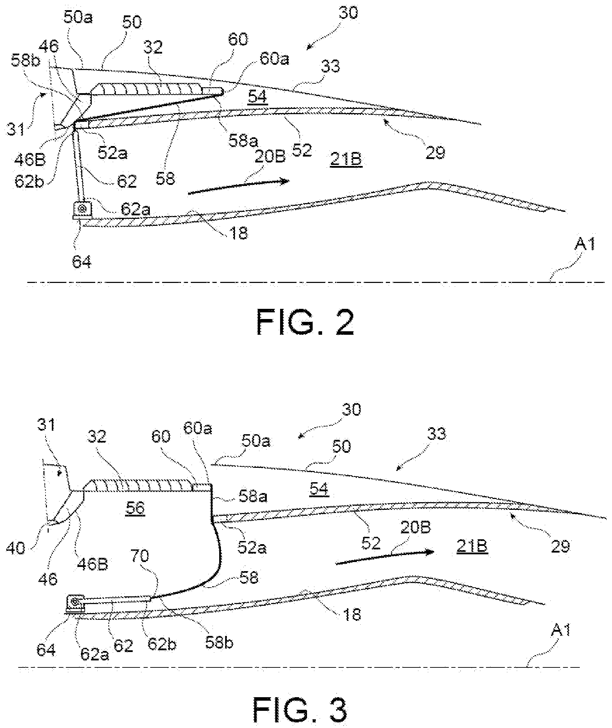

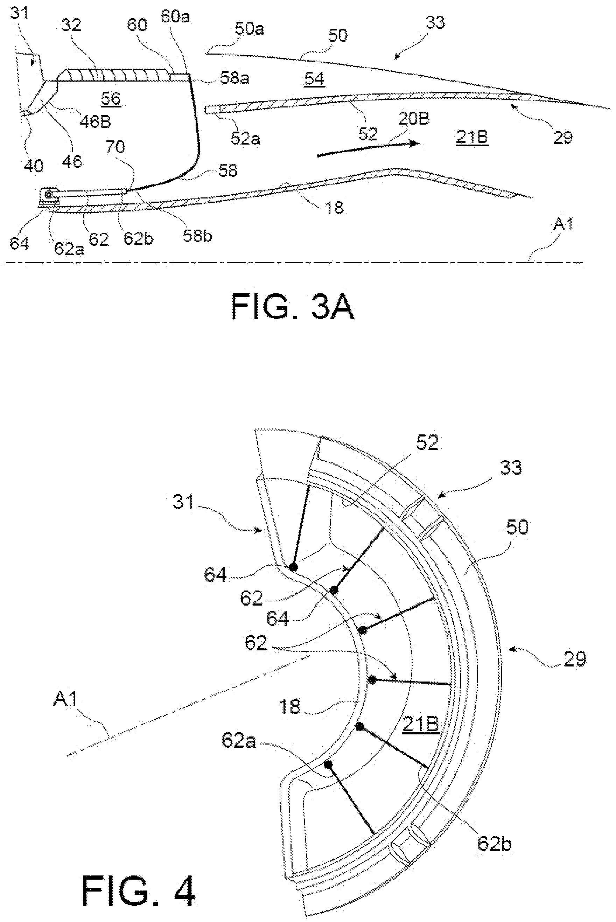

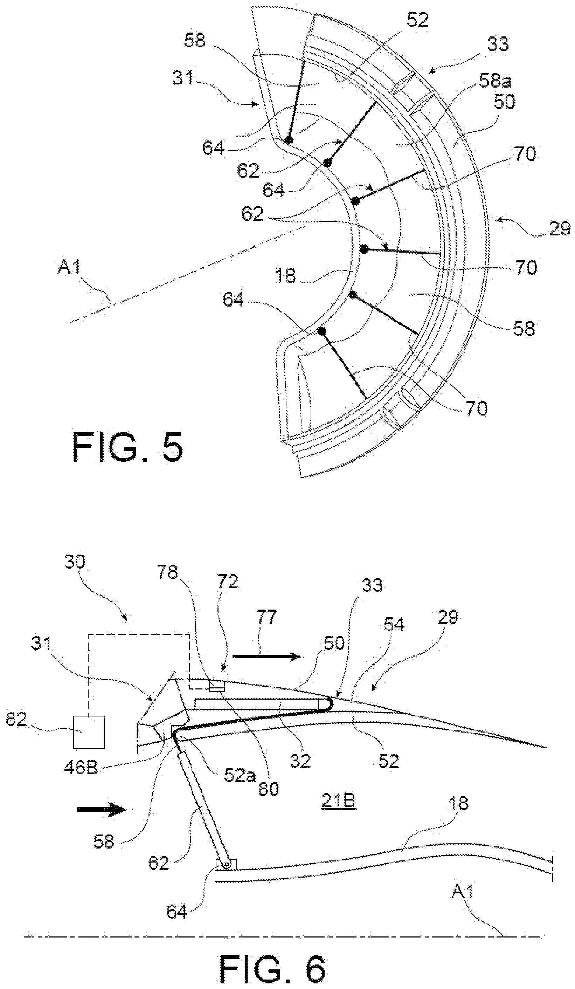

Cette configuration de poussée directe est également représentée sur les figures 2 et 4, tandis que la position reculée d'inversion de poussée de la structure mobile 29 est représentée sur les figures 3 et 5. Sur la figure 3, il est montré que le panneau acoustique interne reculé 52 des capots d'inverseur laisse apparaître en amont une ouverture de passage 56 de la veine secondaire 21B vers les grilles de déviation 32. L'ouverture 56 est donc également délimitée vers l'amont par le bord de déviation 46B, qui s'évase radialement vers l'extérieur en allant vers l'arrière, pour canaliser un écoulement d'air destiné à traverser les grilles 32 lorsque le système mobile se trouve dans cette position reculée d'inversion de poussée. En d'autres termes, le bord de déviation 64 s'éloigne progressivement de l'axe A1 en allant de l'avant vers l'arrière, pour guider / dévier l'air vers les grilles 32 en configuration d'inversion de poussée. A l'aval, l'ouverture de passage 56 est délimitée en particulier par l'extrémité amont 52a de la paroi radialement interne 52.

Afin de dévier au moins une partie du flux secondaire 20B vers l'ouverture de passage 56 définie axialement entre le bord de déviation 46B et l'extrémité amont 52a de la paroi radialement interne 52 de chaque capot 33, l'inverseur 30 comporte dans ce mode de réalisation préféré une ou plusieurs membranes d'obturation 58. Par la suite, il sera décrit une réalisation dans laquelle une seule membrane 58 est associée à chaque capot d'inverseur 33 en présentant une amplitude angulaire identique ou similaire, mais il reste envisageable de prévoir plusieurs membranes circonférentiellement adjacentes associées à chaque capot 33. De même, seule la coopération entre une membrane 58 et son capot associé 33 sera décrite ci-après, étant entendu que cette coopération est identique ou similaire pour tous les capots de l'inverseur 33.

La membrane 58 peut être réalisée dans un matériau connu de l'homme du métier pour ce type d'application. Par exemple, il peut s'agir d'un tissu non imprégné, par exemple de fibres d'aramide. La membrane 58 peut également être réalisée à l'aide d'un matériau composite dont la matrice est particulièrement souple, par exemple en polyuréthane aliphatique, ce qui permet l'utilisation dans des conditions de températures différentes, notamment des températures plus faibles dans le cas d'une membrane en polyuréthane aliphatique que dans le cas d'une membrane en silicone. La matrice donne une faible capacité de reprise en flexion et le comportement de la structure obtenue est bien celui d'une membrane. L'une des propriétés majeures de cette membrane 58 est de pouvoir se plier de manière parfaitement réversible (élastique ou par glissement de fibres) avec un rayon de courbure très faible par rapport à sa surface, et d'avoir une épaisseur très faible, par exemple de l'ordre de 0,1 à 3 mm. A titre informatif, il est observé que cette membrane 58 se comporte comme une voile de bateau ou un parachute / une aile volante quand elle est mise sous pression.

Toujours en référence aux figures 1 à 5, il est prévu des premiers moyens d'accrochage reliant une première extrémité 58a de la membrane d'obturation 58 à un cadre arrière 60 de support des grilles 32, ce support annulaire ou en forme de tronçon annulaire reliant en effet l'extrémité arrière de plusieurs grilles adjacentes. De plus, des seconds moyens d'accrochage relient une seconde extrémité 58b de la membrane d'obturation 58, opposée à la première membrane 58a, à la paroi 18.

En outre, comme cela est visible sur les figures 1, 2 et 4, lorsque la structure mobile 29 occupe sa position avancée de poussée directe, au moins une partie de la membrane d'obturation 58 se trouve agencée radialement entre les grilles de déviation 32 et la paroi radialement interne 52 du capot d'inverseur 33, dans la cavité 54. De préférence, la partie de la membrane 58 qui se trouve dans cette cavité 54 du capot d'inverseur 33, recouvre radialement l'intégralité de la longueur des grilles 32. De ce fait, lorsque la structure mobile 29 adopte sa position avancée de poussée directe, la seconde extrémité 58b de la membrane 58 est pincée entre l'extrémité amont de la paroi 18, et le bord de déviation 46B. Afin d'éviter d'éventuelles dégradations de la membrane 58 du fait de ce pincement, le bord de déviation 46B peut localement présenter une échancrure de forme adaptée pour recevoir l'extrémité amont 52a de la paroi 52. Ainsi, la membrane 58 se trouve également plaquée dans cette échancrure du bord de déviation 46B, par l'appui de l'extrémité amont de la paroi 52.

Egalement, comme cela est visible sur la figure 3, lorsque la structure mobile 29 se déplace et qu'elle occupe sa position reculée d'inversion de poussée à la fin de ce déplacement, la membrane d'obturation 58 se trouve en partie en appui contre l'extrémité amont 52a de la paroi radialement interne 52 du capot d'inverseur, correspondant donc au panneau acoustique. Plus précisément, au cours du déplacement vers l'arrière de la structure mobile 29, la membrane 58 glisse sur cette l'extrémité amont 52a de la paroi radialement interne 52.

En position reculée d'inversion de poussée de la figure 3, la membrane 58 est donc en appui axial vers l'aval contre l'extrémité amont 52a. Il est à noter que selon l'étendue de la course axiale de l'inverseur, la membrane 58 peut ne plus être en contact avec le panneau interne acoustique 52 dans la position totalement déployée de l'inverseur, où le capot 33 est dans sa position la plus reculée. Une telle configuration est représentée sur la figure 3A, sur laquelle il est bien montré que la membrane 58 se trouve en amont et à distance de l'extrémité amont 52a de la paroi 52 du capot d'inverseur. L'option avec contact correspond à une course minimisée de l'inverseur, tandis que l'option sans contact correspond en général à une forme de membrane plus lisse en jet inversé, donc plus performante d'un point de vue aérodynamique.

Ainsi, la partie de la membrane 58 qui se situe radialement vers l'extérieur par rapport à sa zone d'appui sur la paroi 52 obture une partie de l'ouverture axiale amont de la cavité 54, tandis que l'autre partie située radialement vers l'intérieur obture au moins une partie de la veine secondaire 21B, déviant de la sorte au moins une partie du flux secondaire 20B vers l'ouverture de passage 56 en direction des grilles 32.

Une autre possibilité, non représentée, consiste à réaliser l'accrochage radialement externe de la membrane 58 sur la paroi radialement externe 50 du capot coulissant 33. L'extrémité 58b de la membrane 58 a quant à elle des câbles 70 reliés à la paroi 18 (également dénommée IFS, de l'anglais « Inner Fixed Structure »), par une liaison qui peut avantageusement exercer une force de traction sur chaque câble 70 le ramenant vers cette paroi 18, par exemple au moyen d'une liaison élastique. Les câbles 70 eux-mêmes peuvent être élastiques, par exemple en utilisant des câbles en kevlar, et ces mêmes câbles peuvent être mis en tension lors de la fermeture du capot coulissant 33. Des renforts peuvent être intégrés à la membrane 58 dans le prolongement de ces câbles 70, jusqu'aux points d'accroche externes avec le cadre arrière de support de grilles 60, ou la paroi externe 50 du capot coulissant 33.

Ces câbles 70 sont avantageusement positionnés radialement dans la veine en étant circonférentiellement espacés les uns des autres. En position de jet direct, ils tendent la membrane 58 entre son extrémité 58a et le bord d'attaque / l'extrémité amont 52a de la paroi 52 du capot. Lors du déploiement, quand le capot coulissant 33 recule, les câbles 70 viennent tirer la membrane 58 vers la veine secondaire de façon à ce qu'elle y prenne l'air et s'y déploie progressivement.

Selon le but recherché, les seconds moyens d'accrochage peuvent être constitués par des bielles 62, à la place des câbles cités précédemment. Une première extrémité 62a de chacune d'elles est montée sur la paroi 18, de préférence par l'intermédiaire d'une liaison pivot ou rotule 64. Cette liaison 64 peut être réalisée à l'aide d'une ferrure fixée sur la paroi fixe 18 et coopérant avec la première extrémité de bielle 62a.

Les bielles 62 sont espacées circonférentiellement les unes des autres au sein de la veine secondaire 21B, et leur nombre peut par exemple varier de deux à dix.

Chaque bielle 62 est conçue pour se déplacer d'une position en saillie radialement dans la veine secondaire 21B, position montrée sur les figures 2 et 4 adoptée lorsque la structure mobile 29 occupe sa position avancée de poussée directe, à une position rabattue vers l'aval, montrée sur les figures 3 et 5 adoptée lorsque la structure mobile 29 occupe sa position reculée d'inversion de poussée.

Des moyens élastiques de rappel peuvent être prévus pour tendre à incliner chaque bielle 62 vers sa position rabattue / couchée de la figure 3, en particulier quand la bielle est dans sa position en saillie correspondant à la position de vol de l'inverseur.

La seconde extrémité 62b de chaque bielle 62, opposée à la première extrémité 62a, peut être raccordée directement sur la seconde extrémité 58b de la membrane 58.

Néanmoins, d'autres solutions préférentielles sont retenues, comme celles visant à intégrer des câbles ou des sangles de renforts au sein des seconds moyens d'accrochage.

Dans le mode de réalisation représenté sur les figures 1 à 5, les câbles 70 coopèrent avec les bielles 62 en étant chacun fixé à la seconde extrémité 62b de l'une des bielles associée à ce câble. Alternativement, les câbles 70 pourraient traverser leurs bielles associées 62 pour être fixés sur la paroi 52 de délimitation radialement interne de la veine secondaire, par exemple via les ferrures 66.

Il est rappelé que dans un inverseur à grilles classique, la structure mobile coulisse par rapport à la structure fixe par l'intermédiaire d'un système rail/ glissière qui guide la structure mobile de l'avant vers l'arrière lors de la phase d'ouverture de l'inverseur, et de l'arrière vers l'avant lors de la phase de fermeture. Un effort vers l'arrière appliqué sur la structure mobile de l'inverseur engendre donc son déplacement vers l'arrière, par rapport à la structure fixe. Cet effort est habituellement généré par les actionneurs conventionnels comme les vérins ou vis à billes.

Par contraste, l'une des particularités de l'invention réside dans le fait que l'inverseur n'est pas équipé d'actionneurs conventionnels permettant le déplacement de la structure mobile 29 vers l'arrière, de sa position avancée de poussée directe vers sa position reculée d'inversion de poussée. En d'autres termes, contrairement aux conceptions conventionnelles, il n'est pas prévu de vérin ou de vis à billes destinés à générer et contrôler l'intégralité de la course d'ouverture des capots mobiles 33 vers la position reculée d'inversion de poussée, entre leurs deux positions extrêmes. En conséquence, il n'est pas prévu non plus de moteur ou de pompe qui fourniraient l'énergie hydraulique, électrique ou pneumatique pour actionner ces vérins ou vis à billes.

Des moyens spécifiques sont ainsi prévus pour provoquer le déplacement vers l'arrière de chaque capot mobile 33, comme cela va être décrit ci-dessous en référence aux figures 6 à 8, correspondant à d'autres vues plus détaillées de l'inverseur selon le mode de réalisation préféré précédemment décrit en référence aux figures 1 à 5.

L'inverseur comprend en effet, pour chaque capot mobile 33, un système commandé de déplacement 72 de ce capot mobile vers l'arrière, par injection d'air extérieur à travers la paroi radialement externe 50 du capot, dans sa cavité 54.

Pour ce faire, le système 72 est tout d'abord équipé d'au moins une écope 78, prévue sur la paroi radialement externe 50 et faisant préférentiellement partie intégrante de celle-ci, en étant agencée préférentiellement sur une portion amont de cette paroi. Cette écope 78, de préférence de conception dynamique, par exemple de type NACA (développée par le Comité Consultatif National pour l'Aéronautique, de l'anglais « National Advisory Committee for Aeronautics »), est conçue pour écoper de l'air extérieur dans le flux d'air extérieur 77 circulant autour de la nacelle, selon la direction S1. De préférence, ce sont plusieurs écopes 78 qui équipent la paroi 50 de chaque capot, par exemple jusqu'à six écopes par capot 33, réparties circonférentiellement de manière régulière ou non autour de l'axe A1.

En outre, à chaque écope 78, il est associée une vanne commandée 80 permettant, en position ouverte, la circulation d'air extérieur pressurisé à travers l'écope. A cet égard, il est noté que l'écope 78 peut déboucher directement à l'intérieur de la cavité 54 du capot, auquel cas la vanne commandée 80 peut être intégrée à l'écope, ou fixée à l'extrémité de celle-ci. Selon une autre possibilité, l'écope 78 est prolongée par un conduit d'injection (non représenté), prévu par exemple pour orienter l'air extérieur prélevé en direction du fond aval de la cavité 54. Dans ce cas de figure, la vanne commandée 80 peut aussi être implantée sur ce conduit d'injection, sans sortir du cadre de l'invention.

La vanne 80 est commandée par un système 82 de contrôle de vanne, par exemple le FADEC (correspondant à l'acronyme anglais de « Full Authority Digital Engine Control »). Le système de contrôle 82 est capable de délivrer un signal électrique à la vanne de manière à la faire basculer d'une position ouverte à une position fermée, et inversement.

En vol, lorsque l'inverseur est en configuration de poussée directe, la vanne 80 est maintenue en position fermée par le système de contrôle 82. De ce fait, aucun prélèvement n'est réalisé sur le flux d'air extérieur 77 par l'écope 78.

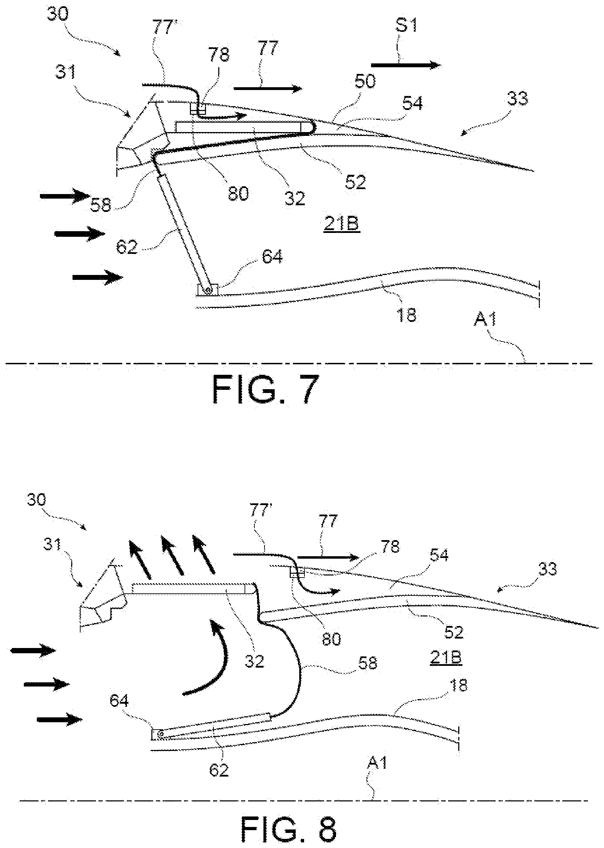

Lorsque l'inverseur doit être basculé en configuration d'inversion de poussée, il est réalisé un déplacement de la structure mobile 31 de sa position avancée de poussée directe vers sa position reculée d'inversion de poussée, et pour ce faire, il est non seulement procédé à un déverrouillage de chaque capot mobile 33 par rapport à la structure fixe 31 de l'inverseur, mais également à une étape de commande de la vanne 80. En effet, le système de contrôle 82 ouvre la vanne 80, de sorte que l'écope 78 puisse remplir sa fonction en écopant une partie 77' du flux extérieur 77, comme cela a été schématisé sur la figure 7. Cela permet la circulation du prélèvement d'air extérieur pressurisé 77' à travers la paroi 50 via son écope 78, et donc l'injection de cet air extérieur dans la cavité 54. Du fait de la pression élevée de cet air extérieur sur les surfaces des parois 50, 52 du capot 33 à l'intérieur de la cavité 54, il se produit un déplacement de ce capot 33 vers l'arrière en direction de sa position reculée d'inversion de poussée.

Ainsi, le système commandé de déplacement 72 propre à l'invention permet de générer de manière simple, fiable et efficace une impulsion lors du début de la course d'ouverture du capot mobile 33. La pression de l'air issu de l'écope 78 peut aussi contribuer à déplacer le capot mobile lors de la suite de cette course d'ouverture, même après une ouverture importante ou une ouverture totale de la structure mobile 33, telle que représentée sur la figure 8.

La suite de cette course d'ouverture du capot mobile 33 s'effectue néanmoins de préférence sous l'effet d'autres principes, comme la trainée de l'air sur la surface aérodynamique extérieure de la paroi 50, ou encore la dépression observée à l'arrière du capot 33, ou encore l'introduction de l'air pressurisé issu de la veine secondaire directement dans la cavité par l'ouverture engendrée par le recul du panneau translatant, ou lorsque l'air externe s'engouffre par écopage dans l'ouverture engendrée à l'avant du panneau externe translatant. Un actionneur de type conventionnel, mais de faible dimensionnement, pourrait néanmoins être conservé pour assurer cette fin de course d'ouverture en vol, même s'il ne s'agit pas de la solution préférée. La présence d'un tel actionneur plus faiblement dimensionné pourrait aussi être justifiée pour réaliser des opérations de test avant le vol, et/ou pour autoriser des opérations de maintenance au sol avec la structure mobile 29 en position reculée.

En outre, un actionneur peut être prévu pour assurer la course de fermeture de la structure mobile 29, correspondant à son déplacement de la position reculée d'inversion de poussée, vers la position avancée de poussée directe.

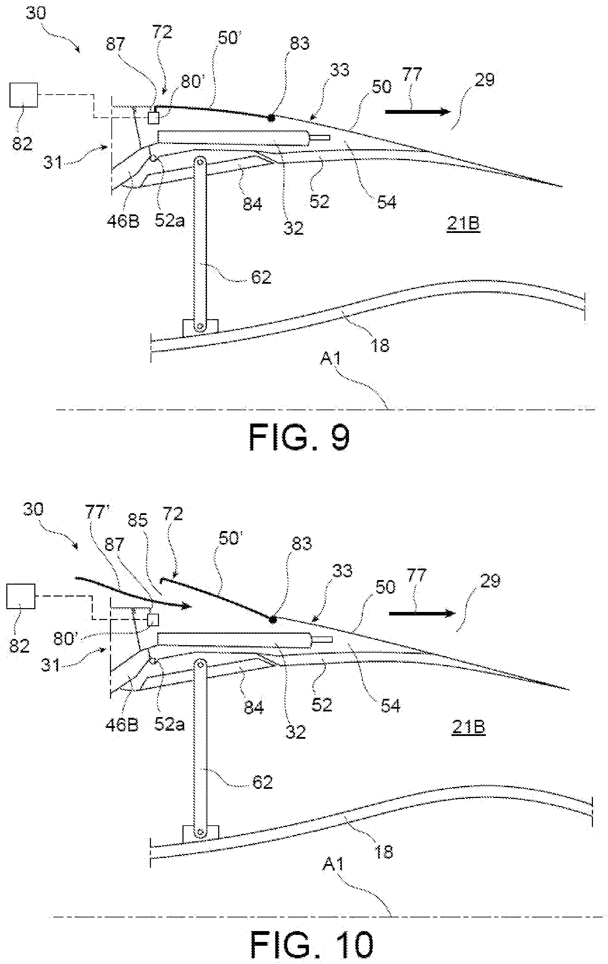

Les figures 9 à 11 représentent un autre mode de réalisation préféré de l'invention, dans lequel les moyens d'obturation de la veine secondaire 21B sont réalisés à l'aide de volets 84, ces derniers étant par exemple chacun articulé à l'une de ses extrémités sur l'extrémité amont 52a de la paroi 52, et également articulé dans une zone centrale sur une bielle 62, elle-même articulée sur la paroi 18. Dans cette configuration, il s'agit de volets d'obturation 84 conventionnels, non-écopants. A cet égard, il est noté que ces moyens d'obturation conventionnels, du type volets 84, peuvent d'ailleurs être préférés par rapport à la solution à membrane décrite en relation aux figures précédentes. D'ailleurs, toutes les caractéristiques spécifiques aux différents modes de réalisation préférés de l'invention peuvent être mises en œuvre avec des volets d'obturation 84.

Il est noté qu'une solution mixte intégrant à la fois des volets et des membranes d'obturation de la veine reste possible, sans sortir du cadre de l'invention.

Dans le mode de réalisation préféré des figures 9 à 11, le système commandé de déplacement 72 prend une forme différente, puisque les écopes 78 sont remplacées par une ou plusieurs trappes 50' équipant la paroi radialement externe 50, en faisant donc préférentiellement partie intégrante de celle-ci. Chaque trappe 50' est articulée à son extrémité arrière sur la partie principale de la paroi 50, selon une articulation 83 d'orientation parallèle ou sensiblement parallèle à une direction circonférentielle / tangentielle de l'inverseur, en rapport à l'axe A1.

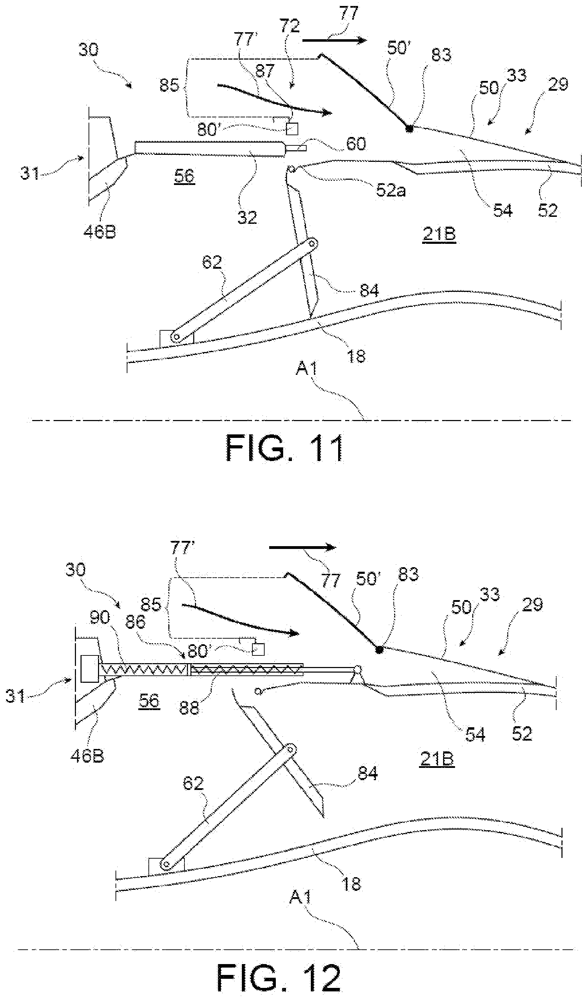

La trappe 50' est conçue de manière à pouvoir adopter une position fermée telle que montrée sur la figure 9 et adoptée en jet direct, ainsi qu'une position ouverte telle que représentée sur les figures 10 et 11.

Dans la position ouverte, la trappe 50' fait saillie radialement vers l'extérieur par rapport à la partie principale de la paroi 50 sur laquelle elle est articulée. Par conséquent, avec son extrémité avant décalée axialement et radialement de la partie principale de la paroi 50, la trappe définit avec cette dernière une ouverture 85 de passage de l'air extérieur à travers la paroi 50, en direction de la cavité.

A chaque trappe 50', il est associé un dispositif commandé permettant de maintenir la trappe en position fermée, et de libérer cette même trappe lorsque son ouverture dans le flux extérieur 77 est désirée. Ce dispositif peut être un simple verrou commandé 80', interposé entre l'extrémité avant de la trappe 50', et la partie principale de la paroi 50 au niveau d'une découpe 87 de celle-ci, obturée par la trappe 50' en position fermée.

Ici aussi, le verrou 80' peut être commandé par le système 82 représenté très schématiquement sur la figure 9.

En vol, lorsque l'inverseur est en configuration de poussée directe, le verrou 80' maintient la trappe 50' en position fermée, via le système de contrôle 82. De ce fait, aucun prélèvement n'est réalisé sur le flux d'air extérieur 77 par la trappe 50'. La trappe 50' se trouve alors dans la continuité aérodynamique de la surface extérieure de la paroi 50.

Lorsque l'inverseur doit être basculé en configuration d'inversion de poussée, il est réalisé un déplacement de la structure mobile 31 de sa position avancée de poussée directe vers sa position reculée d'inversion de poussée, et pour ce faire, il est non seulement procédé à un déverrouillage de chaque capot mobile 33 par rapport à la structure fixe 31 de l'inverseur, mais également à une étape de commande du verrou 80'. En effet, le système de contrôle 82 ouvre le verrou 50', entraînant une ouverture de la trappe 50' soit du fait d'un système élastique forçant cette trappe 50' vers sa position ouverte, par exemple implanté dans l'articulation 83, et/ou du fait de l'action du flux extérieur d'air sur l'extrémité avant de cette trappe, qui tend à se soulever.

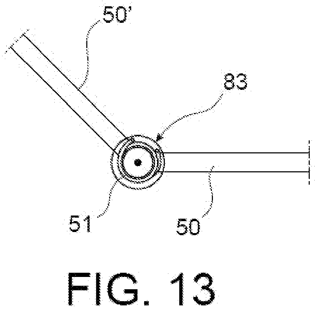

Le système de déplacement 72 peut donc comporter également des moyens élastiques forçant la trappe 50' vers sa position ouverte, lorsque celle-ci est déverrouillée. Ces moyens élastiques 51 peuvent être par exemple des ressorts de torsion situés dans les charnières d'articulation 83 de la trappe 50', comme cela a été schématisé sur la figure 13. Il pourrait alternativement / simultanément être prévu des moyens élastiques linéaires situés entre la trappe 50' et le capot mobile 33, ou encore intégrés au verrou 80' de cette trappe.

Dès le début du pivotement de la trappe 50' via son articulation 83, elle libère une ouverture 85 à travers laquelle une partie 77' du flux extérieur 77 peut transiter, en direction de l'intérieur de la cavité 54 comme cela a été schématisé sur la figure 10. Cela permet effectivement la circulation du prélèvement d'air extérieur pressurisé 77' à travers la paroi 50 via l'ouverture 85, et donc l'injection de cet air extérieur dans la cavité 54. Du fait de la pression élevée de cet air extérieur sur les surfaces des parois 50, 52 du capot 33 à l'intérieur de la cavité 54, il se produit un déplacement de ce capot 33 vers l'arrière en direction de sa position reculée d'inversion de poussée. Le déplacement vers l'arrière résulte également de la pression de l'air extérieur s'exerçant sur la trappe 50' en saillie dans le flux d'air extérieur 77.

Ainsi, le système commandé de déplacement 72 permet de générer de manière simple, fiable et efficace une impulsion lors du début de la course d'ouverture du capot mobile 33. La pression de l'air injecté dans la cavité 54 peut aussi contribuer à déplacer le capot mobile lors de la suite de cette course d'ouverture, même après une ouverture importante ou une ouverture totale de la structure mobile 33, telle que représentée sur la figure 11. Il en est de même pour l'effort appliqué sur le capot 33, émanant de la pression de l'air extérieur sur la trappe 50' en saillie dans le flux d'air extérieur 77.

La suite de cette course d'ouverture du capot mobile 33 s'effectue également de préférence sous l'effet d'autres principes, comme la trainée de l'air sur la surface aérodynamique extérieure de la paroi 50, ou encore la dépression observée à l'arrière du capot 33, ou encore l'introduction de l'air pressurisé issu de la veine secondaire directement dans la cavité par l'ouverture engendrée par le recul du panneau translatant, ou lorsque l'air externe s'engouffre par écopage dans l'ouverture engendrée à l'avant du panneau externe translatant. Ici également, un actionneur de type conventionnel, mais de faible dimensionnement, pourrait être conservé pour assurer cette fin de course d'ouverture en vol, même s'il ne s'agit pas de la solution préférée. La présence d'un tel actionneur plus faiblement dimensionné pourrait aussi être justifiée pour réaliser des opérations de test avant le vol, et/ou pour autoriser des opérations de maintenance au sol avec la structure mobile 29 en position reculée.

En outre, un actionneur peut ici aussi être prévu pour assurer la course de fermeture de la structure mobile 29, correspondant à son déplacement de la position reculée d'inversion de poussée, vers la position avancée de poussée directe.

Bien évidemment, dans les deux modes de réalisation préférés qui viennent d'être décrits, la conception des moyens d'obturation de la veine secondaire reste interchangeable.

Enfin, la figure 12 représente une alternative applicable à tous les modes de réalisation préférés. Entre la structure fixe 31 et la structure mobile 29, il est prévu un dispositif d'amortissement 86 de fin de course d'ouverture du capot mobile 33, par exemple sous forme de vérin mécanique équipé d'un ou plusieurs ressorts d'amortissement 88. Au sein de ce dispositif 86, ou dans un dispositif séparé, il peut aussi être prévu des moyens mécaniques d'impulsion de la course d'ouverture du capot mobile 33, de préférence également sous forme de moyens élastiques comme un ou plusieurs ressorts d'impulsion 90. Le dispositif 86 peut par exemple être implanté circonférentiellement entre les grilles de déviation 32 (non représentées sur la figure 12), et ce sont un ou plusieurs de ces dispositifs 86 qui équipent chacun des deux capots mobiles 33.

Ces moyens d'amortissement peuvent être incorporés à des vérins ou vis à billes complémentaires d'ouverture ou de fermeture. De préférence, l'inverseur comporte des moyens de reprise des efforts de contre-poussée entre la structure mobile et la structure fixe générés sur les moyens d'obturation de la veine et la structure mobile. Ces moyens peuvent être communalisés avec le dispositif d'amortissement et/ou les vérins d'ouvertures et de fermetures complémentaires, ou peuvent être des moyens séparés comme des butées au niveau des rails de glissement ou des bielles télescopiques dédiées.

Diverses modifications peuvent être apportées par l'homme du métier à l'invention qui vient d'être décrite, uniquement à titre d'exemples non limitatifs, et dont la portée est définie par les revendications annexées. Par exemple, l'inverseur de poussée 30 peut alternativement présenter une architecture en « C » ou en « O ». En outre, si les modes de réalisation préférés décrits ci-dessus concernent une conception d'inverseur à grilles de déviation fixes, ces grilles peuvent alternativement être intégrées à la structure mobile de l'inverseur.

## Revendications

1. Inverseur de poussée (30) pour ensemble propulsif d'aéronef, l'inverseur comprenant une structure fixe (31) équipée d'une paroi de délimitation radialement interne (18) d'une veine secondaire (21B) de l'ensemble propulsif destinée à être traversée par un flux secondaire (20B), l'inverseur comprenant également une structure mobile (29) comprenant au moins un capot mobile d'inverseur (33) présentant une cavité (54) délimitée entre une paroi radialement externe (50) et une paroi radialement interne (52) du capot mobile d'inverseur (33), la paroi radialement externe formant une surface aérodynamique extérieure de l'inverseur, épousée par de l'air extérieur, la structure mobile étant déplaçable en translation par rapport à la structure fixe selon un axe central longitudinal (A1) de l'inverseur, entre une position avancée de poussée directe et une position reculée d'inversion de poussée, **caractérisé en ce que** l'inverseur comprend également un système commandé (72) de déplacement du capot mobile (33) vers la position reculée d'inversion de poussée, par injection d'air extérieur à travers la paroi radialement externe (50) du capot mobile d'inverseur, dans ladite cavité (54).

2. Inverseur de poussée selon la revendication 1, **caractérisé en ce que** le système de déplacement (72) comporte :
- au moins une écope (78) prévue sur la paroi radialement externe (50) du capot mobile et conçue pour écoper de l'air extérieur ;
- une vanne commandée (80) permettant, en position ouverte, la circulation d'air extérieur à travers l'écope (78) et en direction de ladite cavité (54).

3. Inverseur de poussée selon la revendication 1, **caractérisé en ce que** le système de déplacement (72) comporte :
- au moins une trappe (50') équipant la paroi radialement externe (50), la trappe étant conçue de manière à pouvoir adopter une position fermée, ainsi qu'une position ouverte dans laquelle elle fait saillie radialement vers l'extérieur, en définissant une ouverture (85) de passage de l'air extérieur à travers la paroi radialement externe (50) ;
- un dispositif commandé (80') permettant de maintenir la trappe (50') en position fermée, et de libérer ladite trappe.

4. Inverseur de poussée selon la revendication 3, **caractérisé en ce que** le système de déplacement (72) comporte également des moyens élastiques (51) forçant la trappe (50') vers sa position ouverte, lorsque celle-ci est déverrouillée.

5. Inverseur de poussée selon l'une quelconque des revendications précédentes, **caractérisé en ce que** le nombre d'écopes (78) / de trappes (50') est compris entre un et six, répartis circonférentiellement autour de l'axe central longitudinal (A1).

6. Inverseur de poussée selon l'une quelconque des revendications précédentes, **caractérisé en ce que** dans la position reculée d'inversion de poussée de la structure mobile (29), la structure fixe (31) de l'inverseur et une extrémité amont (52a) de la paroi radialement interne reculée (52) du capot mobile d'inverseur laissent apparaître entre elles une ouverture de passage (56) d'air à travers la veine secondaire (21B), l'inverseur de poussée comprenant également des moyens d'obturation (58, 84) de la veine secondaire, conçus pour dévier au moins une partie du flux secondaire (20B) vers l'ouverture de passage (56).

7. Inverseur de poussée selon l'une quelconque des revendications précédentes, **caractérisé en ce que** la structure fixe (31) de l'inverseur comporte au moins une grille de déviation (32) agencée, en position avancée de poussée directe de la structure mobile, dans la cavité (54) du capot mobile, en étant isolée de la veine secondaire par la paroi radialement interne (52) du capot d'inverseur (33).

8. Inverseur de poussée selon l'une quelconque des revendications précédentes, **caractérisé en ce qu'**il comporte également un dispositif (86) d'amortissement de fin de course d'ouverture du capot mobile (33), dans son déplacement allant de la position avancée de poussée directe vers la position reculée d'inversion de poussée.

9. Ensemble propulsif (1) pour aéronef, comprenant une turbomachine (2) et une nacelle (3) comportant au moins un capot de soufflante (14), ainsi qu'un inverseur de poussée (30) selon l'une quelconque des revendications précédentes.

10. Procédé de commande d'un inverseur de poussée (30) selon l'une quelconque des revendications 1 à 8, **caractérisé en ce que** pour entraîner le déplacement de la structure mobile (33) de sa position avancée de poussée directe vers sa position reculée d'inversion de poussée, le procédé comprend une étape de commande du système de déplacement (72), de manière à ce que de l'air extérieur soit injecté à travers la paroi radialement externe (50), dans ladite cavité (54) du capot mobile, afin de provoquer son déplacement vers la position reculée d'inversion de poussée.

## Patentansprüche

1. Schubumkehrvorrichtung (30) für eine Antriebsanordnung für ein Luftfahrzeug, wobei die Umkehrvorrichtung eine feststehende Struktur (31) umfasst, die mit einer radial inneren Begrenzungswand (18) eines Sekundärstromkanals (21B) der Antriebsanordnung ausgestattet ist, die dazu bestimmt ist, von einem Sekundärstrom (20B) durchquert zu werden, wobei die Umkehrvorrichtung auch eine bewegliche Struktur (29) umfasst, die mindestens eine bewegliche Umkehrvorrichtungsabdeckung (33) umfasst, die einen Hohlraum (54) aufweist, der zwischen einer radial äußeren Wand (50) und einer radial inneren Wand (52) der beweglichen Umkehrvorrichtungsabdeckung (33) begrenzt ist, wobei die radial äußere Wand eine aerodynamische Außenoberfläche der Umkehrvorrichtung bildet, die von Außenluft umgeben ist, wobei die bewegliche Struktur in Bezug auf die feststehende Struktur entlang einer Längsmittelachse (A1) der Umkehrvorrichtung zwischen einer vorgeschobenen Position für den direkten Schub und einer zurückgezogenen Position für die Schubumkehr verschiebbar ist,
**dadurch gekennzeichnet, dass** die Umkehrvorrichtung auch ein gesteuertes Verschiebesystem (72) der beweglichen Abdeckung (33) in die zurückgezogene Position zur Schubumkehr durch Einblasen von Außenluft durch die radial äußere Wand (50) der beweglichen Umkehrvorrichtungsabdeckung hindurch in den Hohlraum (54) umfasst.

2. Schubumkehrvorrichtung nach Anspruch 1, **dadurch gekennzeichnet, dass** das Verschiebesystem (72) beinhaltet:
- mindestens eine Hutze (78), die an der radial äußeren Wand (50) der beweglichen Abdeckung vorgesehen ist und gestaltet ist, um Außenluft abzuschöpfen;
- ein gesteuertes Ventil (80), das in offener Position die Zirkulation von Außenluft durch die Hutze (78) hindurch, und in Richtung des Hohlraums (54) ermöglicht.

3. Schubumkehrvorrichtung nach Anspruch 1, **dadurch gekennzeichnet, dass** das Verschiebesystem (72) beinhaltet:
- mindestens eine Klappe (50'), welche die radial äußere Wand (50) ausstattet, wobei die Klappe gestaltet ist, um eine geschlossene Position, sowie eine offene Position einnehmen zu können, in der sie radial nach außen vorsteht und dabei eine Öffnung (85) für den Durchfluss von Außenluft durch die radial äußere Wand (50) hindurch definiert;
- eine gesteuerte Vorrichtung (80'), die es ermöglicht, die Klappe (50') in geschlossener Position zu halten und die Klappe freizugeben.

4. Schubumkehrvorrichtung nach Anspruch 3, **dadurch gekennzeichnet, dass** das Verschiebesystem (72) auch elastische Mittel (51) beinhaltet, welche die Klappe (50') in ihre offene Position drängen, wenn diese entriegelt ist.

5. Schubumkehrvorrichtung nach einem der vorstehenden Ansprüche, **dadurch gekennzeichnet, dass** die Anzahl an Hutzen (78)/Klappen (50') zwischen eins und sechs umfasst ist, die in Umfangsrichtung um die Längsmittelachse (A1) herum verteilt sind.

6. Schubumkehrvorrichtung nach einem der vorstehenden Ansprüche, **dadurch gekennzeichnet, dass** in der zurückgezogenen Position für die Schubumkehr der beweglichen Struktur (29) die feststehende Struktur (31) der Umkehrvorrichtung und ein stromaufwärts gelegenes Ende (52a) der radial inneren, zurückgezogenen Wand (52) der beweglichen Umkehrvorrichtungsabdeckung zwischen sich eine Durchgangsöffnung (56) für Luft durch den Sekundärstromkanal (21B) hindurch erscheinen lassen, wobei die Schubumkehrvorrichtung auch Verschlussmittel (58, 84) für den Sekundärstromkanal umfasst, die gestaltet sind, um mindestens einen Teil des Sekundärstroms (20B) zur Durchgangsöffnung (56) hin umzuleiten.

7. Schubumkehrvorrichtung nach einem der vorstehenden Ansprüche, **dadurch gekennzeichnet, dass** die feststehende Struktur (31) der Umkehrvorrichtung mindestens ein Ablenkgitter (32) beinhaltet, das in der vorgeschobenen Position für den direkten Schub der beweglichen Struktur im Hohlraum (54) der beweglichen Abdeckung angeordnet ist und durch die radial innere Wand (52) der Umkehrvorrichtungsabdeckung (33) vom Sekundärstromkanal isoliert ist.

8. Schubumkehrvorrichtung nach einem der vorstehenden Ansprüche, **dadurch gekennzeichnet, dass** sie auch eine Endlagendämpfungsvorrichtung (86) für eine Öffnung der beweglichen Abdeckung (33) in ihrer Verschiebung von der vorgeschobenen Position für den direkten Schub in die zurückgezogene Position für die Schubumkehr beinhaltet.

9. Antriebsanordnung (1) für ein Luftfahrzeug, umfassend ein Turbotriebwerk (2) und eine Gondel (3), die mindestens eine Gebläseabdeckung (14) sowie eine Schubumkehrvorrichtung (30) nach einem der vorstehenden Ansprüche beinhaltet.

10. Verfahren zur Steuerung einer Schubumkehrvorrichtung (30) nach einem der Ansprüche 1 bis 8, **dadurch gekennzeichnet, dass** das Verfahren zum Antreiben der Verschiebung der beweglichen Struktur (33) von ihrer vorgeschobenen Position für den direkten Schub in ihre zurückgezogene Position für die Schubumkehr ,einen Schritt zum Steuern des Verschiebesystems (72) umfasst, sodass Außenluft durch die radial äußere Wand (50) in den Hohlraum (54) der beweglichen Abdeckung eingeblasen wird, um deren Verschiebung in die zurückgezogene Position für die Schubumkehr zu veranlassen.

## Claims

1. Thrust reverser (30) for an aircraft propulsion unit, the reverser comprising a fixed structure (31) equipped with a radially inner delimiting wall (18) of a secondary duct (21B) of the propulsion unit intended to be traversed by a secondary flow (20B), the reverser also comprising a movable structure (29) comprising at least one movable reverser cowl (33) having a cavity (54) delimited between a radially outer wall (50) and a radially inner wall (52) of the reverser movable cowl (33), the radially outer wall forming an outer aerodynamic surface of the reverser, enclosed by external air, the movable structure being movable in translation with respect to the fixed structure along a longitudinal central axis (A1) of the reverser, between an advanced position of direct thrust and a retracted position of thrust reversal,
**characterized in that** the reverser also comprises a controlled system (72) for moving the movable cowl (33) to the retracted thrust reversal position, by injecting external air through the radially outer wall (50) of the movable cowl of the reverser, into said cavity (54).

2. Thrust reverser according to claim 1, **characterized in that** the movement system (72) includes:
- at least one scoop (78) provided on the radially outer wall (50) of the movable cowl and designed to scoop outside air;
- a controlled valve (80) allowing, in the open position, the circulation of external air through the scoop (78) and towards said cavity (54).

3. Thrust reverser according to claim 1, **characterized in that** the movement system (72) includes:
- at least one hatch (50') equipping the radially outer wall (50), the hatch being designed so as to be able to adopt a closed position, as well as an open position in which it protrudes radially outwards, while defining an opening (85) for passing outside air through the radially outer wall (50);
- a controlled device (80') for holding the hatch (50') in the closed position, and releasing said hatch.

4. Thrust reverser according to claim 3, **characterized in that** the movement system (72) also includes elastic means (51) forcing the hatch (50') towards its open position, when it is unlocked.

5. Thrust reverser according to any one of the preceding claims, **characterized in that** the number of scoops (78)/hatches (50') is between one and six, distributed circumferentially around the longitudinal central axis (A1).

6. Thrust reverser according to any one of the preceding claims, **characterized in that** in the retracted thrust reversal position of the movable structure (29), the fixed structure (31) of the reverser and an upstream end (52a) of the retracted radially inner wall (52) of the movable reverser cowl reveal between them a passage opening (56) for air through the secondary duct (21B), the thrust reverser also comprising means (58, 84) for closing off the secondary duct, designed to divert at least a portion of the secondary flow (20B) toward the passage opening (56).

7. Thrust reverser according to any one of the preceding claims, **characterized in that** the fixed structure (31) of the reverser comprises at least one deflection grille (32) arranged, in the advanced position of direct thrust of the movable structure, in the cavity (54) of the movable cowl, being isolated from the secondary duct by the radially inner wall (52) of the reverser cowl (33).

8. Thrust reverser according to any one of the preceding claims, **characterized in that** it also includes a device (86) for damping the end of opening travel of the movable cowl (33), in its movement from the advanced position of direct thrust to the retracted position of thrust reversal.

9. Aircraft propulsion unit (1), comprising a turbine engine (2) and a nacelle (3) including at least one fan cowl (14), as well as a thrust reverser (30) according to any one of the preceding claims.

10. Method for controlling a thrust reverser (30) according to any one of claims 1 to 8, **characterized in that**, to drive the movement of the movable structure (33) from its advanced position of direct thrust to its retracted position of thrust reversal, the method comprises a step of controlling the movement system (72), so that external air is injected through the radially outer wall (50), into said cavity (54) of the movable cowl, in order to cause it to move to the retracted thrust reversal position.
